# EUROPÄISCHE PATENTSCHRIFT

(11) **EP 4 032 776 B1**
(45) Veröffentlichungstag und Bekanntmachung des Hinweises auf die Patenterteilung: **03.09.2025**
(21) Anmeldenummer: 21152794.0
(22) Anmeldetag: 21.01.2021
(51) Int. Cl.: B61C 3/00, B61C 17/00

(54) **ENERGIEVERSORGENDER DOPPELSTOCKWAGEN, SCHIENENFAHRZEUG UND VERFAHREN ZUR HERSTELLUNG EINES DOPPELSTOCKWAGENS**
ENERGY-SUPPLYING DOUBLE-DECKER CARRIAGE, RAIL VEHICLE AND METHOD OF MANUFACTURING A DOUBLE-DECKER CARRIAGE
VOITURE À DOUBLE ÉTAGE À ALIMENTATION EN ÉNERGIE, VÉHICULE FERROVIAIRE ET PROCÉDÉ DE FABRICATION D'UNE VOITURE À DOUBLE ÉTAGE

(43) Veröffentlichungstag der Anmeldung: 27.07.2022
(73) Patentinhaber: Stadler Rail AG, 9565 Bussnang (CH)
(72) Erfinder: Schmid, Kuno, 8400 Winterthur (CH)
(74) Vertreter: Hepp Wenger Ryffel AG

(56) Entgegenhaltungen:
- EP-A1- 2 030 860
- EP-A1- 2 335 993
- EP-A1- 3 626 509
- CN-U- 204 250 048
- DE-A1- 102009 008 549

## Beschreibung

Die Erfindung richtet sich auf einen energieversorgenden Doppelstockwagen, ein Schienenfahrzeug und ein Verfahren zur Herstellung eines solchen energieversorgenden Doppelstockwagens.

Ein Transformator ist üblicherweise in elektrisch betriebenen Schienenfahrzeugen ausgebildet, damit die durch die externe Spannungsversorgung zur Verfügung gestellte Spannung, auf die erforderliche Nennspannung zum Betreiben des Fahrzeugs gebracht werden kann.

In Doppelstockwagen wird der Transformator üblicherweise innerhalb des Wagenkastens in einem Technikabteil platziert, so dass weniger Platz für Passagiere zur Verfügung steht.

Üblicherweise sind die Traktionskomponenten in Doppelstockwagen verteilt platziert.

Die Anordnung von mehreren Transformatoren zur Reduktion des Platzbedarfs an einer Stelle hat jedoch den Nachteil, dass bei gleichbleibender Effizienz das Gesamtgewicht grösser ist. Es ist im Stand der Technik bekannt vorteilhaft nur einen Transformator für einen Wagen zu verwenden.

Das Dokument EP 2 030 860 A1 offenbart einen energieversorgenden Doppelstockwagen, welcher in einem Dachbereich Aussparungen aufweist, in denen Betriebseinrichtungen für das Fahrzeug wie Hilfstransformatoren oder Klimaanlagen angeordnet sind.

Das Dokument DE 10 2009 008 549 A1 offenbart eine Anordnung zum Betreiben von Verbrauchern in einem Schienenfahrzeug mit elektrischer Energie.

Das Dokument EP 2 335 993 A1 offenbart eine Zugkomposition eines Personenzuges, wobei die Wagen der Zugkomposition unterschiedliche Längen aufweisen.

Das Dokument EP 3 626 509 A1 offenbart ein Schienenfahrzeug, welches ein elektrisches Traktionssystem aufweist.

Das Dokument CN 204 250 048 U offenbart eine Zugkomposition bestehend aus einem Front- und einem Hecktriebkopf sowie einem Speisewagen und einem Personenwagen.

Es ist daher Gegenstand der vorliegenden Erfindung, diese Nachteile des Standes der Technik zu überwinden und eine Vorrichtung vorzustellen, mit der die Anordnung nur genau eines Haupttransformators in einem energieversorgenden Doppelstockwagen ermöglicht wird ohne einen grossen Platzverlust zu erzeugen.

Die Aufgabe wird durch einen energieversorgenden Doppelstockwagen, ein Schienenfahrzeug und ein Verfahren zur Herstellung eines Schienenfahrzeuges gemäss den Ansprüchen 1, 10 und 14 gelöst.

Ein energieversorgender Doppelstockwagen zur Stromversorgung, insbesondere ein Passagierdoppelstockwagen, umfasst einen Haupttransformator, eine Stromzuführung zum Haupttransformator, mindestens ein Drehgestell und ein Dach. Der Haupttransformator des energieversorgenden Doppelstockwagens ist in einem Dachbereich, vorzugsweise im Wesentlichen oberhalb eines Drehgestells, insbesondere am oder auf dem Dach, angeordnet.

Ein energieversorgender Doppelstockwagen bezeichnet in diesem Fall einen Doppelstockwagen, der eine Spannung aus einer, insbesondere externen, Spannungsversorgung in eine für das Fahrzeug erforderliche Nennspannung umwandeln kann und in einem Schienenfahrzeug Verwendung finden kann. Der energieversorgende Doppelstockwagen ist insbesondere ein doppelstöckiger Schienenfahrzeugwagen. Mit der Begrifflichkeit eines energieversorgenden Doppelstockwagens ist in diesem Zusammenhang der Wagen mit dem Haupttransformator bezeichnet, sodass der Transformator des energieversorgenden Doppelstockwagens selbst von einem anderen Wagen mit Strom gespeist werden kann.

Das Drehgestell kann hierbei ein Jakobsdrehgestell oder ein normales Drehgestell sein. Weiterhin kann es sich um ein Lauf- oder Triebdrehgestell handeln.

Ein Wagenende eines Doppelstockwagens bezeichnet einen Bereich, welcher das letzte Drittel des Doppelstockwagens entlang seiner Längsachse bis zum Ende des Doppelstockwagens umfasst. Die Begrifflichkeit "oberhalb des Drehgestells" bezieht sich in diesem Zusammenhang auf den Bereich vertikal über dem Drehgestell des letzten Drittel des Wagens, in dem das Drehgestell angeordnet ist.

Der Haupttransformator ist der Transformator, der unter anderem die Energie für die Traktion zur Verfügung stellt.

Die Anordnung eines einzigen Haupttransformators ermöglicht ein geringeres Gewicht des energieversorgenden Doppelstockwagens. Zusätzlich zu der erhöhten Effizienz in Bezug auf das Gewicht eines einzigen Haupttransformators wird eine einfachere Anbringung der Hochspannungskabel und eine kürzere Stromzuführung ermöglicht. Durch eine solche Anbringung der Hochspannungskabel wird zum einen die Verlegung der Hochspannungskabel erleichtert und zudem die elektromagnetische Verträglichkeit erhöht. Ausserdem ermöglicht die Verwendung eines Haupttransformators die Verwendung von nur einem Hauptschalter.

Die Stromzuführungen können ebenfalls ein hohes Gewicht aufweisen und es ist demnach vorteilhaft die benötigte Länge gering zu halten.

Der Dachbereich ist vertikal deutlich näher an Stromabnehmern und insbesondere Oberleitungen angeordnet und eignet sich somit sehr gut für die Anbringung des Haupttransformators, da die Stromzuführungen zum Haupttransformator kürzer gehalten werden können.

Durch diese vorteilhafte Anordnung und optimiertes Gewicht des Haupttransformators wird der Raum für Passagiere im energieversorgenden Doppelstockwagen optimiert.

Der Haupttransformator ist vorzugsweise im Wesentlichen oberhalb eines Drehgestells angeordnet, sodass die Achslast nicht überschritten wird und das darunter angeordnete Drehgestell die Hauptlast des Haupttransformatorgewichtes trägt.

Die Anbringung des Dachtransformators im Dachbereich gewährleistet zudem trotzdem eine hohe Stabilität gegenüber Seitenwind, da die maximale Achslast ausgenutzt werden kann.

Der Haupttransformator kann in Querrichtung des energieversorgenden Doppelstockwagens im Wesentlichen mittig, vorzugsweise mit der längsten Ausdehnung des Haupttransformators parallel zur Längsachse, angeordnet sein.

Eine derartige Anordnung des Haupttransformators hat den Vorteil, dass sich der Schwerpunkt des Haupttransformators in Querrichtung mittig im Fahrzeug befindet und Gewichtsasymmetrien vermieden werden.

Die Transformatorkühlung für den Haupttransformator kann zudem ebenfalls im Dachbereich am Haupttransformator angeordnet werden, wodurch lange Leitungen und hydraulische Schnittstellen entfallen.

Ein energieversorgender Doppelstockwagen kann vorzugsweise mindestens einen Hauptschalter umfassen, der vorzugsweise in der Stromzuführung zum Haupttransformator angeordnet ist und eine selektiv trennbare Verbindung herstellt.

Eine selektiv trennbare Verbindung bezeichnet, dass die elektrische Verbindung vollständig trennbar ist, wobei dies manuell oder fremdkraftbetätigt ausführbar ist. Selektiv trennbar heisst weiterhin, dass die Stromzufuhr von der externen Stromquelle in Richtung Haupttransformator trennbar ist und/oder die Stromzufuhr vom Haupttransformator in die externe Stromquelle trennbar ist. Selektiv trennbar bedeutet zudem in diesem Zusammenhang, dass eine Verbindung sowohl getrennt, als auch wiederhergestellt werden kann.

Ein nicht energieversorgender Wagen eines Schienenfahrzeugs kann zudem ebenfalls mindestens einen Hauptschalter umfassen, der vorzugsweise in der Stromzuführung zum Haupttransformator angeordnet ist und eine selektiv trennbare Verbindung herstellt.

Ein Hauptschalter bietet einen zusätzlichen Schutz und Sicherheit, um den energieversorgenden Doppelstockwagen von der elektrischen Versorgung zu trennen, und kann mit zusätzlichen Vorrichtungen als Schutzvorrichtung bei Über- und Unterspannung, sowie Überstrom dienen.

Der Hauptschalter ist vorzugsweise auf dem Doppelstockwagen, der den Stromabnehmer aufweist angeordnet, sodass keine Verbindung zu einem benachbarten Doppelstockwagen dazwischen vorliegen muss. Somit kann die Stromspeisung bevorzugt auf dem Doppelstockwagen, der den Stromabnehmer aufweist, vor der Verbindung zu anderen Wagen unterbrochen werden. Hierbei muss der Stromabnehmer nicht zwingend auf einem energieversorgenden Doppelstockwagen angeordnet sein.

Eine Anordnung des Hauptschalters auf dem Doppelstockwagen mit Stromabnehmer erlaubt, dass Verbindungen zwischen Doppelstockwägen trotz vorliegender Stromspeisung sicher ausgebildet werden können. Der Doppelstockwagen mit Stromabnehmer und Hauptschalter kann in diesem Zusammenhang insbesondere ein Endwagen sein.

Im Fall von mehreren Stromabnehmern pro Wagen und/oder Schienenfahrzeug ist es nötig, dass jede Verbindung vom jeweiligen Stromabnehmer zu einem Haupttransformator einzeln elektrisch durch einen Hauptschalter selektiv trennbar ist.

Ein energieversorgender Doppelstockwagen kann vorzugsweise einen oder zwei Stromabnehmer umfassen, welcher mindestens einen Haupttransformator über die Stromzuführung mit Strom versorgt.

Die Anordnung eines Stromabnehmers und vorzugsweise Hauptschalters auf einem energieversorgenden Doppelstockwagen ist besonders geeignet für Mittelwagen, da diese keine schwere Crashfront aufweisen müssen und die Gewichtsverteilung leichter, zumindest teilweise, zu kompensieren ist. Bei einem Mittelwagen kann der Haupttransformator auf dem gegenüberliegenden Wagenende des energieversorgenden Doppelstockwagens des Stromabnehmers angeordnet sein, während dennoch eine vorteilhafte Gewichtsverteilung und zumindest teilweise kompensierte Achslast gewährleistet sind.

Zumindest ein Drehgestell eines energieversorgenden Doppelstockwagens kann ein Triebdrehgestell sein.

Ein Triebdrehgestell umfasst mindestens eine, insbesondere zwei, angetriebene Achsen.

Insbesondere sind alle Drehgestelle des energieversorgenden Doppelstockwagens Triebdrehgestelle.

Ein energieversorgender Doppelstockwagen umfasst vorzugsweise zumindest einen Stromrichter, wobei pro Triebdrehgestell ein Stromrichter ausgebildet ist. Insbesondere bevorzugt ist der Stromrichter im Wesentlichen oberhalb eines Drehgestells angeordnet. Weiter bevorzugt ist je ein Stromrichter über je einem Triebdrehgestell angeordnet.

Alle Stromrichter eines Wagens, insbesondere eines energieversorgenden Doppelstockwagens, werden von dem Haupttransformator gespeist.

Der Stromrichter speist die Fahrmotoren eines Drehgestells und ist vorzugsweise nahe am Drehgestell angeordnet.

Die Verwendung von einem Stromrichter pro Drehgestell ist vorteilhaft. Somit ist es von der Gewichtsverteilung her möglich sowohl den Haupttransformator, als auch einen Stromrichter auf einem Wagenende eines Wagens, insbesondere eines energieversorgenden Doppelstockwagens, anzuordnen.

Ein Stromrichter versorgt in dieser Anordnung vorzugsweise die Motoren für alle Achsen des Triebdrehgestells.

Der energieversorgende Doppelstockwagen kann eine Kühlvorrichtung umfassen, wobei die Kühlvorrichtung derartig angeordnet ist, dass sie für Stromrichter und Fahrmotor des Triebdrehgestells verwendbar ist.

Eine Kühlvorrichtung ist sowohl für den/die Stromrichter als auch den/die Fahrmotor/en des Triebdrehgestells zusammen verwendbar, wenn ein geringer Abstand zwischen dem Stromrichter und Fahrmotor vorliegt. Die Kühlvorrichtung saugt die Aussenluft mittels eines Ventilators an und drückt sie zu den Fahrmotoren. Der Stromrichterkühler kann optional zusätzlich im Fahrmotorluftstrom angeordnet werden, auf der Saugseite oder der Druckseite des Ventilators.

Der Abstand zwischen dem Stromrichter und Fahrmotor wird möglichst gering gehalten, sodass die Kühlvorrichtung möglichst kurze Zu- und Ableitungen aufweisen muss und die Kühlvorrichtung für sowohl den/die Stromrichter als auch den die Fahrmotor/en verwendet werden kann. Das Gewicht wird somit vorteilhaft reduziert, da nicht zwei oder mehr separate Kühlvorrichtungen benötigt werden.

Die Kühlvorrichtung kann vorzugsweise zudem auf der im Querschnitt gegenüberliegenden Seite des energieversorgenden Doppelstockwagens von einem Stromrichter angebracht werden, sodass der Schwerpunkt des energieversorgenden Doppelstockwagens im Wesentlichen mittig auf der Querachse liegt.

Bevorzugt kann ein nicht energieversorgender Doppelstockwagen ebenfalls eine Kühlvorrichtung umfassen, wobei die Kühlvorrichtung derartig angeordnet ist, dass sie für Stromrichter und Fahrmotor des Triebdrehgestells verwendbar ist.

Generell ist eine spiegelsymmetrische Anordnung von ähnlich schweren Komponenten zu einer vertikalen Ebene der Längsachse vorteilhaft, wenn dies möglich ist, da eine solche Anordnung keine Asymmetrien verursacht. Somit wird eine asymmetrische Belastung der Räder vermieden.

Eine punktsymmetrische Anordnung zur Mitte der Querachse des energieversorgenden Doppelstockwagens ist ebenfalls vorstellbar, sodass zumindest ein im Wesentlichen mittiger Schwerpunkt gewährleistet wird.

Vorzugsweise sind alle besonders schweren Komponenten, wie der Stromrichter und die Transformatorkühlung möglichst vertikal tief anzuordnen, damit der Schwerpunkt des energieversorgenden Doppelstockwagens nicht zu hoch liegt und der Haupttransformator im Dachbereich kompensiert wird.

Der energieversorgende Doppelstockwagen kann eine verstärkte Wagenkastenstruktur aufweisen, vorzugsweise durch ein geschlossenes Profil entlang der Seitenwände und/oder der Decke und/oder des Bodens des energieversorgenden Doppelstockwagens, um das Gewicht des Haupttransformators im Dachbereich aufnehmen zu können.

Das Gewicht des Haupttransformators wird so zuverlässig von der Wagenkastenstruktur aufgenommen, sodass die Sicherheit und strukturelle Integrität gewährleistet werden kann.

Zum sicheren Anbringen des Haupttransformators eignet sich eine Verstärkung der Seitenwände und/oder der Decke und/oder des Bodens durch ein geschlossenes Profil, Rippen und/oder Träger. Der Transformator weist vorzugsweise eine Länge von 2,5 **m,** eine Breite von 2,5 m und eine Höhe von 1 m auf. Das Gewicht des Transformators inklusive der Kühlvorrichtung beträgt vorzugsweise 5 t.

Ein energieversorgender Doppelstockwagen kann ein Endwagen sein, der insbesondere eine Front aufweist. Der Haupttransformator ist an dem der Front gegenüberliegenden Ende im Wesentlichen im letzten Drittel des Wagens angeordnet, sodass die Achslast 21 t, vorzugsweise 20 t bei ordnungsgemäss vorgesehener Beladung nicht übersteigt.

Der energieversorgende Doppelstockwagen kann ein Mittelwagen sein.

Somit kann einer der schweren Anteile der Traktionskette auf einem Mittelwagen angeordnet werden, so dass die Gewichtsverteilung nicht nur innerhalb eines Wagens, sondern innerhalb des Schienenfahrzeuges stattfinden kann.

Die Erfindung ist anwendbar für Wechselstrom- und Gleichstromspeisung. Gleichstrom-spezifische Teile und die Systemumschalter können demnach analog zum Haupttransformator bei Wechselstrom im Dachbereich des zum energieversorgenden Doppelstockwagen benachbarten Doppelstockwagens angeordnet werden.

Die Aufgabe wird weiterhin durch ein Schienenfahrzeug gelöst, welches mindestens einen energieversorgenden Doppelstockwagen wie vorhergehend beschrieben umfasst.

Das Schienenfahrzeug umfasst mindestens einen energieversorgenden Doppelstockwagen.

Die Wagen des Schienenfahrzeugs weisen eine Verbindung auf, sodass eine ein energieversorgender Doppelstockwagen einen anderen Wagen mit Energie versorgen und/oder von ihm beziehen kann.

Ein derartiges Schienenfahrzeug weist einen optimierten Passagierplatz bei optimaler Gewichtsverteilung auf.

Das Schienenfahrzeug kann mindestens einen, insbesondere zwei, energieversorgenden Doppelstockwagen als Endwagen umfassen.

Ein Endwagen ist mit einer Front und vorzugsweise Crashfront ausgestattet und die Ausgestaltung als energieversorgender Doppelstockwagen optimiert Passagierkapazität und Gewichtsverteilung.

Da ein Endwagen eine Front in der Regel mit einer Crashfront als Kollisionsschutz, die ein hohes Gewicht an einem Wagenende des Endwagens verursacht, aufweist ist es vorteilhaft, dass der Haupttransformator auf dem gegenüberliegenden Wagenende angeordnet ist, um die Gewichtsverteilung der Achslasten möglichst gut auszugleichen.

Insbesondere vorteilhaft ist es den Haupttransformator auf einem energieversorgenden Doppelstockwagen anzuordnen, der keinen Stromabnehmer aufweist, sondern die Stromspeisung von einem anderen Wagen vorgenommen wird, sodass die Gewichtsverteilung im energieversorgenden Doppelstockwagen optimiert ist.

Vorzugsweise umfasst das Schienenfahrzeug zwei Endwagen, mit vorzugsweise identischen Konfigurationen in spiegelverkehrter Anordnung auf gegenüberliegenden Seiten. Es wäre jedoch auch ein normaler Doppelstockwagen als Endwagen vorstellbar, der als Steuerwagen dient.

Zumindest je ein Stromabnehmer kann auf einem mit dem einen, insbesondere beiden, Endwagen verbundenen Mittelwagen angeordnet sein und die Stromzuführung kann so vom oder von den Mittelwagen zum oder zu den Endwagen verlaufen, insbesondere umfasst der Mittelwagen mit Stromabnehmer zudem einen Hauptschalter.

Dies hat den Vorteil, dass ein Endwagen durch die Stromzuführung des Stromabnehmers eines Mittelwagens betrieben werden kann und gleichzeitig die Gewichtsverteilung optimiert wird. Vorzugsweise, aber nicht notwendigerweise, ist der Mittelwagen unmittelbar benachbart zum Endwagen, also der nächstliegende Wagen, damit die Stromzu- und Abführungen möglichst gering gehalten werden können, was das Gewicht reduziert und somit Kosten einspart. Es ist auch denkbar, den Stromabnehmer auf einem Mittelwagen anzuordnen, der nicht direkt zu einem Endwagen benachbart angeordnet ist. Die Anbringung des Stromabnehmers ist vorzugsweise unter Berücksichtigung von Platzgründen und Gewichtsverteilung so vollzogen, dass Anzahl der Wagenübergänge der Stromzu- und abführungen in Form von Hochspannungs- und/oder Leistungskabeln minimiert ist.

Vorzugsweise umfasst das Schienenfahrzeug einen Mittelwagen auf dem ein oder zwei Stromabnehmer angeordnet sind, wobei die Stromzuführung zwischen Stromabnehmer und Haupttransformator durch einen Hauptschalter trennbar ist, insbesondere durch zwei Hauptschalter trennbar sind.

Bei der Anordnung von zwei Stromabnehmern auf einem Schienenfahrzeug und insbesondere Doppelstockwagen verlaufen die Stromzuführungen vorzugsweise über die gesamte Längsachse des Wagens und die Stromabnehmer sind bevorzugt miteinander verbunden.

Das Schienenfahrzeug kann zumindest einen, bevorzugt zwei, energieversorgende Doppelstockwagen als Mittelwagen umfassen.

Die Verwendung von Mittelwagen als energieversorgenden Doppelstockwagen ist sinnvoll sowohl für das Betreiben eines nicht energieversorgenden Endwagens und/oder Mittelwagens, als auch bei erhöhtem Strombedarf. Indem mindestens ein Mittelwagen ein energieversorgender Doppelstockwagen ist, kann die Leistung des Schienenfahrzeugs angepasst werden.

Der Haupttransformator und der Antrieb des Schienenfahrzeugs durch Triebdrehgestelle, die zumindest teilweise angetriebene Achsen aufweisen, können somit auf einem oder mehreren Mittelwagen angeordnet werden.

Die Endwagen können in diesem Zusammenhang sowohl Triebdrehgestelle oder Laufdrehgestelle umfassen, also zumindest teilweise angetrieben sein oder lediglich als Steuerwagen dienen.

Der Haupttransformator des energieversorgenden Doppelstockwagens kann auf dem zugewandten Wagenende zu einem Endwagen angeordnet werden, sodass dieser mit Strom gespeist werden kann. Dies erlaubt es, die Gewichtsverteilung des Endwagens zu optimieren, sodass zwei Stromrichter in dem Wagenende eines Endwagens angeordnet werden können, da der Endwagen keinen Haupttransformator umfasst.

Dies ist besonders vorteilhaft um eine vorteilhafte Gewichtsverteilung der Endwagen zu erreichen, wenn es sich um einen Doppelstockwagen mit einer schweren Crashfront an einem Wagenende handelt.

Das Schienenfahrzeug kann weiter zumindest einen, bevorzugt zwei, Endwagen umfassen.

Jeder Endwagen, der von dem energieversorgenden Doppelstockwagen mit Energie versorgt wird, umfasst bevorzugt zwei Stromrichter, so dass eine Stromzuführung vom Haupttransformator auf dem Mittelwagen zum Stromrichter im Endwagen ausgebildet ist.

Die Anordnung des Haupttransformators auf einem anderen Wagen als dem Endwagen ist besonders vorteilhaft, da die Endwagen durch das zusätzliche Gewicht der Crashfront besonders auf das Gewicht und die Gewichtsverteilung optimiert werden müssen.

Zudem ist die Anordnung von zwei Stromrichtern über einem Drehgestell bei einem Endwagen vom Gewicht nur möglich, wenn der Haupttransformator auf einem anderen Wagen angeordnet ist. Eine Ausnahme dazu wäre die Verwendung eines besonders leichten Transformators als Haupttransformator wie beispielsweise ein 50 Hz Transformator.

Die Endwagen des Schienenfahrzeugs können jeweils Triebdrehgestelle umfassen.

Vorzugsweise sind alle Drehgestelle des jeweiligen Endwagens Triebdrehgestelle, insbesondere bevorzugt sind alle Achsen der Triebdrehgestelle der Endwagen angetrieben, sodass mit Hilfe des Haupttransformators ein Stromrichter pro Triebdrehgestell alle Achsen eines Triebdrehgestells antreiben kann.

In diesem Zusammenhang wäre zudem ein einzelner Stromrichter zum Antreiben von zwei Triebdrehgestellen vorstellbar.

Die Mittelwagen des Schienenfahrzeugs können Laufdrehgestelle umfassen. Insbesondere können alle Drehgestelle der Mittelwagen Laufdrehgestelle sein.

Alternativ können zumindest einige Drehgestelle der Mittelwagen Triebdrehgestelle umfassen.

Ein energieversorgenden Doppelstockwagens umfasst somit nicht zwingend ein Triebdrehgestell, aber kann benachbarte Triebdrehgestelle anderer Wagen speisen.

Durch diese Anordnung ist eine modulare Anpassung des Schienenfahrzeugs nach den benötigten Anforderungen möglich. Vorzugsweise handelt es sich um ein Schienenfahrzeug mit zwei Endwagen auf beiden Enden des Schienenfahrzeugs, die ergänzt werden können. Das Schienenfahrzeug kann mit Mittelwagen mit Laufdrehgestellen ergänzt werden und zusätzlich mit energieversorgenden Mittelwagen mit Triebdrehgestellen, falls die Motorisierung nicht mehr ausreichen sollte für die Länge und Gewicht des Schienenfahrzeugs, oder ein Endwagen durch einen energieversorgenden Mittelwagen versorgt werden soll.

Somit ist eine flexible Nutzung des Schienenfahrzeugs mit mindestens einem Haupttransformator im Dachbereich trotz der Verwendung von Doppelstockwagen möglich.

Die Aufgabe wird weiter durch ein Verfahren zur Herstellung eines energieversorgenden Doppelstockwagens gelöst, wobei der Haupttransformator in einem Dachbereich vorzugsweise im Wesentlichen oberhalb eines Drehgestells, insbesondere am oder auf dem Dach, angeordnet wird.

Die Anbringung des Haupttransformators in einem Dachbereich erlaubt zudem eine leichte Zugänglichkeit und ermöglicht eine zusätzliche Gewichtsreduktion sowie eine Optimierung der Passagierkapazität.

Beim Verfahren zur Herstellung eines energieversorgenden Doppelstockwagens, kann eine verstärkte Wagenkastenstruktur unterhalb des Haupttransformators angeordnet werden. Insbesondere wird ein geschlossenes Profil entlang der Seitenwände, der Decke und des Bodens angeordnet.

Durch die Herstellung einer verstärkten Wagenkastenstruktur wird das zusätzliche Gewicht im Dachbereich durch den Haupttransformator aufgenommen und Sicherheit gewährleistet.

Im Folgenden werden Ausführungsformen der Erfindung detailliert mit Bezugszeichen beschrieben. Hierbei zeigt
- Figur 1:: Ein Schienenfahrzeug mit energieversorgenden Doppelstockwagen als Endwagen mit einem Ausschnitt des benachbarten Wagens,
- Figur 2:: einen Schaltplan für ein Schienenfahrzeug mit einem energieversorgenden Doppelstockwagen nach Figur 1,
- Figur 3:: ein Schienenfahrzeug mit einem Ausschnitt eines energieversorgenden Doppelstockwagens als Mittelwagen und dem benachbarten Wagen,
- Figur 4:: einen Schaltplan für ein Schienenfahrzeug mit einem energieversorgenden Doppelstockwagen als Mittelwagen nach Figur 3.

Identische Bezugszeichen in der Abbildung zeigen identische Komponenten.

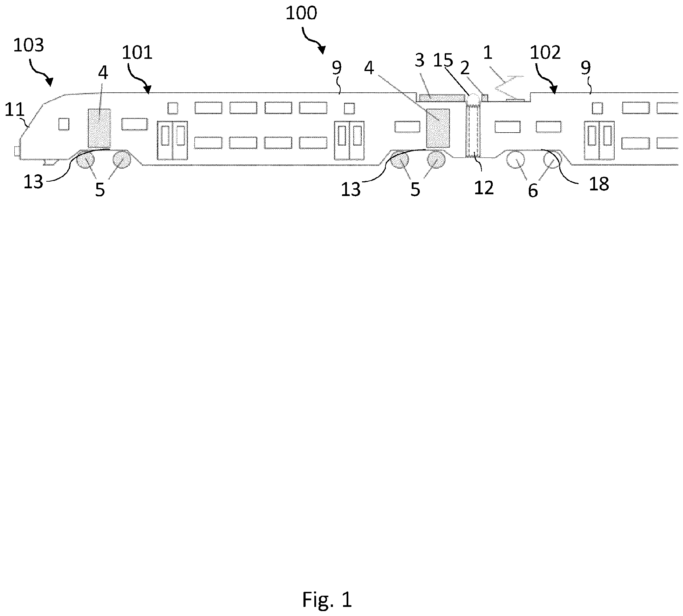

Figur 1 zeigt die Anordnung eines Haupttransformators 3 im Dachbereich am Dach 9 eines Endwagens 101. In diesem Ausführungsbeispiel ist der Haupttransformator 3 im letzten Drittel des Wagenkastens nahe der Verbindung 12 angeordnet.

Die Stromrichter 4 sind jeweils über den Triebdrehgestellen 13 angeordnet, sodass eine einzige Kühlvorrichtung (nicht in Fig. 1 gezeigt) für die Fahrmotoren 5 (nicht in Fig. 1 gezeigt) und die Stromrichter 4 verwendet werden kann.

Da es sich beim energieversorgenden Doppelstockwagen 103 des Schienenfahrzeugs 100 um einen Endwagen 101 handelt, ist die Front 11 mit einer Crashfront (nicht in Fig. 1 gezeigt) ausgestattet, damit die Sicherheit gewährleistet werden kann. Dieses Zusatzgewicht muss unter Berücksichtigung der maximalen Achslast kompensiert werden. In Fig. 1 wird diese zusätzliche Belastung auf der Vorderseite durch die Anbringung des Haupttransformators 3 auf dem gegenüberliegenden Wagenende am Dach 9 ausgeglichen.

Der Endwagen 101 ist zudem mit zwei Triebdrehgestellen 13 mit jeweils zwei durch Fahrmotoren 5 angetriebenen Achsen ausgestattet.

Der benachbarte Mittelwagen 102 ist durch eine ausgebildete Verbindung 12 und eine Stromzuführungsverbindung 15 mit dem Endwagen 101 verbunden.

Die Verbindung von Stromabnehmer 1 zu Stromzuführungsverbindung 15 ist zudem selektiv trennbar durch einen Hauptschalter 2 ausgebildet.

Der Mittelwagen 102 weist dabei ein Laufdrehgestell 18 mit zwei Laufachsen 6 und einen Stromabnehmer 1 auf.

Der Stromabnehmer 1 des Mittelwagens 102 dient in diesem Ausführungsbeispiel der elektrischen Speisung des Endwagens 101.

Der Stromabnehmer 1 ist auf dem nicht energieversorgenden Doppelstockwagen, dem Mittelwagen 102 angebracht. Diese Anbringung des Stromabnehmers 1 ermöglicht eine Anbringung des Haupttransformators 3 am Dach 9 des Endwagens 101.

Somit ist eine vorteilhafte Achslast des Schienenfahrzeugs 100 möglich, da Stromabnehmer 1 und Haupttransformator auf zwei Wagen angeordnet werden können.

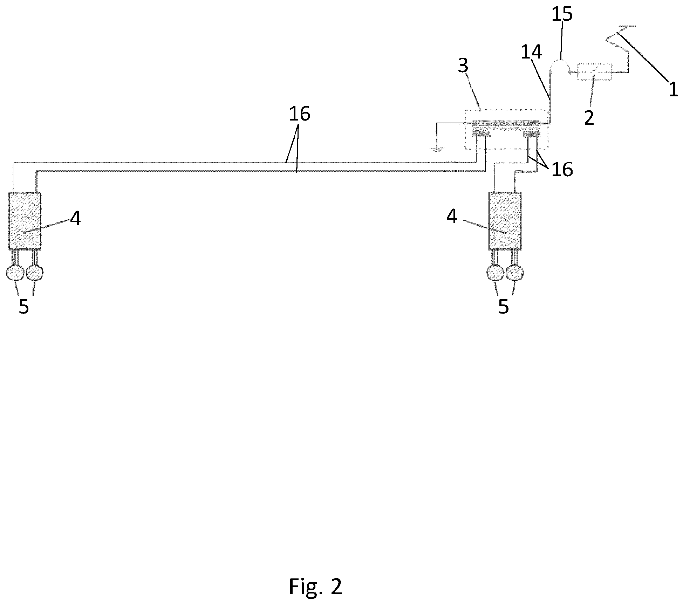

Figur 2 zeigt den Schaltplan für ein Schienenfahrzeug nach Figur 1, wobei der Stromabnehmer 1 mit dem Haupttransformator 3 über einen Hauptschalter 2 selektiv verbindbar über eine Stromzuführungsverbindung 15 zur Stromzuführung 14 dargestellt ist. Die Stromzuführungsverbindung 15 verbindet in diesem Zusammenhang die Stromzuführung 14 über zwei Wagen.

Der transformierte Strom kann über Stromrichterstromzu- und Abführung 16 die Stromrichter 4 speisen und die Fahrmotoren 5 der angetriebenen Radsätze antreiben. Dabei erstreckt sich eine Stromrichterstromzu- und Abführung 16 durch den Endwagen 101 zu dem Stromrichter 4 an dem vorderen Triebdrehgestell 13.

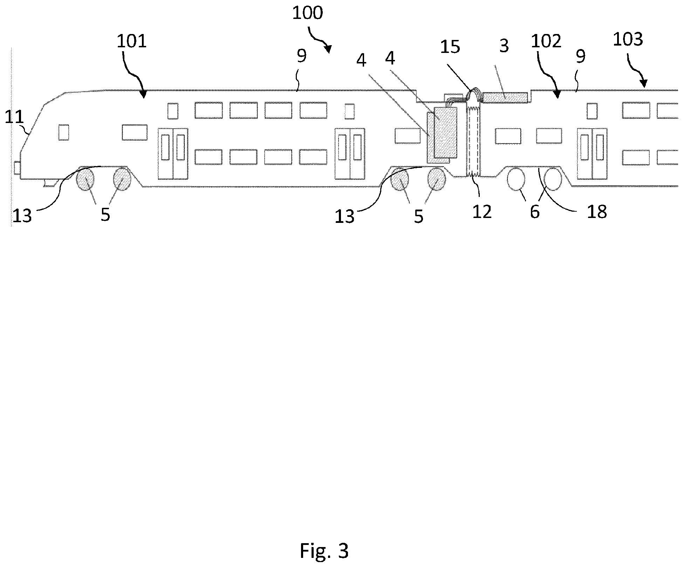

Figur 3 zeigt einen energieversorgenden Doppelstockwagen 103 als Mittelwagen 102 ausschnittweise, der einen nicht energieversorgenden Endwagen 101 antreiben kann.

Der Haupttransformator 3 des energieversorgenden Doppelstockwagens 103 als Mittelwagen 102 ist über eine Stromzuführungsverbindung 15 mit dem Endwagen 101 verbunden.

Der energieversorgende Doppelstockwagen 103 als Mittelwagen 102 weist ein Laufdrehgestell 18, mit zwei Laufachsen 6, und ein Dach 9 auf.

Der Endwagen 101 weist zwei Stromrichter 4 über einem Triebdrehgestell 13 auf, wobei die Stromrichter 4 auf gegenüberliegenden Seiten für optimierte Gewichtsverteilung angeordnet sind.

Die Stromrichter 4 sind so ausgebildet, dass sie durch Fahrmotorkabel 17 (nicht in Fig. 3 gezeigt) die Fahrmotoren 5 der angetriebenen Radsätze der Triebdrehgestelle 13 mit Strom speisen können.

Somit ist die das Gewicht der Front 11, mit einer schweren Crashfront, durch zwei Stromrichter 4 auf der gegenüberliegenden Seite zumindest teilweise ausgeglichen und eine zumindest annähernd gleiche Achslast an beiden Drehgestellen gewährleistet.

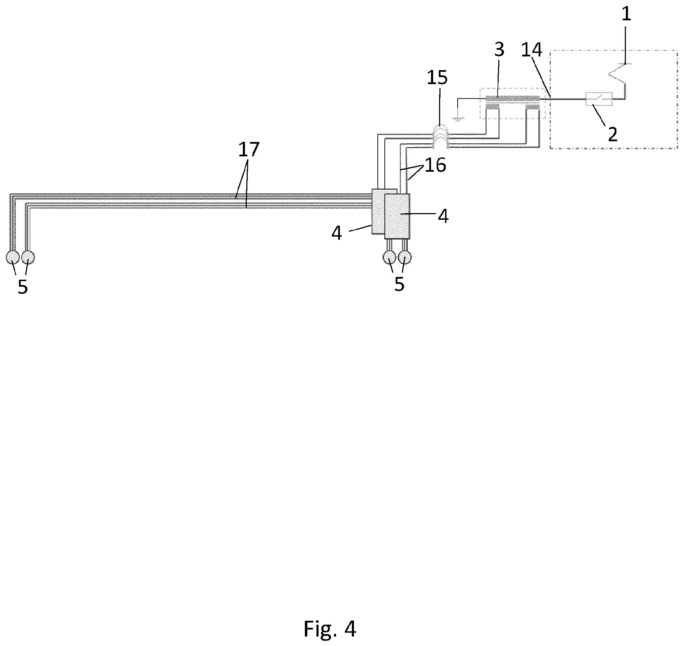

Die selektiv trennbare Stromzuführung 14 durch einen Hauptschalter 2 ist nicht in Figur 3 dargestellt, aber wurde in Figur 4 im Schaltplan in dem gestrichelt abgegrenzten Bereich skizziert.

Figur 4 zeigt den Schaltplan des Schienenfahrzeugs von Figur 3. Der gestrichelt abgegrenzte Bereich ist in diesem Fall auf dem, dem Endwagen 101 benachbarten, energieversorgenden Mittelwagen 102 angeordnet, aber nicht in Figur 3 gezeigt. Der gestrichelte Bereich umfasst einen Stromabnehmer 1 und eine Stromzuführung 14, die durch einen Hauptschalter 2 selektiv trennbar ist.

Es ist aber auch eine Stromspeisung durch einen weiter entfernten Mittelwagen 102 vorstellbar.

Der Haupttransformator 3 ist in Figur 4 am Dach des Mittelwagens 102 vor der Stromzuführungsverbindung 15 angeordnet.

Die Stromzuführungsverbindung 15 überbrückt die Lücke durch die ausgebildete Verbindung 12 zwischen den Doppelstockwägen.

Die Stromrichterstromzu- und Abführungen 16 können somit beide Stromrichter 4 über einem Triebdrehgestell 13 speisen. Ausserdem kann somit eine Kühlvorrichtung für beide Stromrichter 4 und Fahrmotoren 5, unter den zwei Stromrichtern 4, verwendet werden.

Das Triebdrehgestell 13 an der Front 11 des Endwagens 101 ist in Figur 4 über das Fahrmotorkabel 17 mit dem Stromrichter 4 über dem hinteren Drehgestell verbunden, wodurch eine Anbringung eines Stromrichters 4 über dem Drehgestell der Front vermieden werden kann. Somit wird eine vorteilhafte Gewichtsverteilung ermöglicht, aber es sind dennoch beide Triebdrehgestelle 13 des Endwagens 101 antreibbar.

## Patentansprüche

1. Energieversorgender Doppelstockwagen (103) zur Stromversorgung, insbesondere ein Passagierdoppelstockwagen, umfassend einen Haupttransformator (3), eine Stromzuführung zum Haupttransformator (3), mindestens ein Drehgestell (13, 18) und ein Dach (9), **dadurch gekennzeichnet, dass** der Haupttransformator (3) in einem Dachbereich, vorzugsweise im Wesentlichen oberhalb eines Drehgestells, insbesondere am oder auf dem Dach (9), angeordnet ist, wobei zumindest ein Drehgestell ein Triebdrehgestell ist, wobei der energieversorgende Doppelstockwagen (103) zumindest einen Stromrichter umfasst, wobei pro Triebdrehgestell ein Stromrichter ausgebildet ist, wobei der Stromrichter im Wesentlichen oberhalb eines Drehgestells angeordnet ist.

2. Energieversorgender Doppelstockwagen (103) nach Anspruch 1, **dadurch gekennzeichnet, dass** der Haupttransformator (3) im Wesentlichen in Querrichtung des energieversorgenden Doppelstockwagens (103) mittig, vorzugsweise mit der längsten Ausdehnung des Haupttransformators (3) parallel zur Längsachse, angeordnet ist.

3. Energieversorgender Doppelstockwagen (103) nach einem der vorhergehenden Ansprüche, **dadurch gekennzeichnet, dass** der energieversorgende Doppelstockwagen (103) mindestens einen Hauptschalter (2) umfasst, der vorzugsweise in der Stromzuführung zum Haupttransformator angeordnet ist und eine trennbare Verbindung herstellt.

4. Energieversorgender Doppelstockwagen (103) nach einem der vorhergehenden Ansprüche, **dadurch gekennzeichnet, dass** der energieversorgende Doppelstockwagen einen oder zwei Stromabnehmer (1) umfasst, welcher mindestens einen Haupttransformator (3) über die Stromzuführung mit Strom versorgt.

5. Energieversorgender Doppelstockwagen (103) nach einem der vorhergehenden Ansprüche, **dadurch gekennzeichnet, dass** je ein Stromrichter über je einem Triebdrehgestell angeordnet ist.

6. Energieversorgender Doppelstockwagen (103) nach einem der vorhergehenden Ansprüche, **dadurch gekennzeichnet, dass** der energieversorgende Doppelstockwagen (103) eine Kühlvorrichtung (14) umfasst, wobei die Kühlvorrichtung (14) derartig angeordnet ist, dass sie für Stromrichter (4) und Fahrmotor (5) des Triebdrehgestells verwendbar ist.

7. Energieversorgender Doppelstockwagen (103) nach einem der vorhergehenden Ansprüche, **dadurch gekennzeichnet, dass** der energieversorgende Doppelstockwagen (103) eine verstärkte Wagenkastenstruktur aufweist, vorzugsweise durch ein geschlossenes Profil entlang der Seitenwände und/oder der Decke und/oder des Bodens des energieversorgenden Doppelstockwagens (103), um das Gewicht des Haupttransformators (3) im Dachbereich aufnehmen zu können.

8. Energieversorgender Doppelstockwagen (103) nach einem der vorhergehenden Ansprüche, **dadurch gekennzeichnet, dass** der energieversorgende Doppelstockwagen ein Endwagen (101) ist, der insbesondere eine Front (11) aufweist, wobei der Haupttransformator im Wesentlichen an dem der Front (11) gegenüberliegenden Ende im letzten Drittel des Wagens angeordnet ist, sodass die Achslast 21 t, vorzugsweise 20 t, bei ordnungsgemäss vorgesehener Beladung nicht übersteigt.

9. Energieversorgender Doppelstockwagen (103), nach den Ansprüchen 1 bis 7 **dadurch gekennzeichnet, dass** der energieversorgende Doppelstockwagen (103) ein Mittelwagen (102) ist.

10. Schienenfahrzeug (100) **dadurch gekennzeichnet, dass** das Schienenfahrzeug mindestens einen energieversorgenden Doppelstockwagen (103) gemäss einem der vorhergehenden Ansprüche umfasst.

11. Schienenfahrzeug (100) nach Anspruch 10 **dadurch gekennzeichnet, dass** das Schienenfahrzeug mindestens einen, insbesondere zwei, energieversorgende Doppelstockwagen (103) als Endwagen (101) umfasst.

12. Schienenfahrzeug (100) nach Anspruch 11, **dadurch gekennzeichnet, dass** zumindest je ein Stromabnehmer (1) auf einem mit dem einen, insbesondere beiden, Endwagen (101) verbundenen Mittelwagen (102) angeordnet ist und die Stromzuführung so vom oder von den Mittelwagen (102) zum oder zu den Endwagen (101) verläuft, insbesondere umfasst der Mittelwagen (102) mit Stromabnehmer (1) zudem einen Hauptschalter (2) .

13. Schienenfahrzeug (100) nach Ansprüchen 10, **dadurch gekennzeichnet, dass** das Schienenfahrzeug (100) zumindest einen, bevorzugt zwei Endwagen und mindestens einen Mittelwagen umfasst, wobei jeder Endwagen je bevorzugt zwei Stromrichter umfasst, wobei der Endwagen von dem energieversorgenden Doppelstockwagen mit Energie versorgt wird, so dass eine Stromzuführung vom Haupttransformator auf dem Mittelwagen zum Stromrichter im Endwagen ausgebildet ist.

14. Verfahren zur Herstellung eines energieversorgenden Doppelstockwagens (103) nach einem der Ansprüche 1 bis 9, **dadurch gekennzeichnet, dass** der Haupttransformator (3) in einem Dachbereich vorzugsweise im Wesentlichen oberhalb eines Drehgestells, insbesondere am oder auf dem Dach (9), angeordnet wird.

## Claims

1. Energy-supplying double-deck carriage (103), for power supply, in particular a passenger double-deck carriage, comprising a main transformer (3), a power supply line to the main transformer (3), at least one bogie (13, 18) bogie and a roof (9), **characterized in that** the main transformer (3) is arranged in a roof region, preferably substantially above the bogie, in particular on or at the roof (9), wherein at least one bogie is a drive bogie, wherein the energy-supplying double-deck carriage (103) comprises at least one converter, wherein a converter is provided for each drive bogie, wherein the converter is arranged essentially above a bogie.

2. Energy-supplying double-deck carriage (103) according to claim 1, **characterized in that** main transformer (3) is arranged substantially in the transverse direction of the energy-supplying double-deck carriage (103) centrally, preferably arranged with the longest extent of the main transformer (3) parallel to the longitudinal axis.

3. Energy-supplying double-deck carriage (103) according to one of the preceding claims, **characterized in that** the energy-supplying double-deck carriage (103) comprises at least one main switch (2), and the main switch (2) is preferably arranged in the power supply line to the main transformer and establishes a disconnectable connection.

4. Energy-supplying double-deck carriage (103) according to one of the preceding claims, **characterized in that** the energy-supplying double-deck carriage comprises one or two current collectors (1) which supply power to at least one main transformer (3) via the power supply line.

5. Energy-supplying double-deck carriage (103) according to one of the preceding claims, **characterized in that** wherein one converter is arranged essentially above each drive bogie.

6. Energy-supplying double-deck carriage (103) according to one of the preceding claims, **characterized in that** the energy-supplying double-deck carriage (103) comprises comprises a cooling device (14), the cooling device (14) being arranged in such a way that it can be used for converter (4) and traction motor (5) of the drive bogie.

7. Energy-supplying double-deck carriage (103) according to one of the preceding claims, **characterized in that** the energy-supplying double-deck carriage (103) has a reinforced carriage body structure preferably by a closed profile along the side walls and/or the ceiling and/or the floor of the energy-supplying double-deck carriage (103), in order to be able to support the weight of the main transformer (3) in the roof region.

8. Energy-supplying double-deck carriage (103) according to one of the preceding claims, **characterized in that** the energy-supplying double-deck carriage is an end carriage (101) which in particular has a front (11), the main transformer being arranged essentially at the end opposite the front (11) in the last third of the carriage, so that the axle load does not exceed 21 t, preferably 20 t, when properly loaded.

9. Energy-supplying double-deck carriage (103), according to one of the preceding claims 1 to 7 **characterized in that** the energy-supplying double-deck carriage is a middle carriage (102).

10. Rail vehicle (100) **characterized in that**, the rail vehicle comprises at least one energy-supplying double-deck carriage (103) according to one of the preceding claims.

11. Rail vehicle (100) according to claim 10, **characterized in that** the rail vehicle comprises least one, in particular two, energy-supplying double-deck carriages (103) as end carriages (101).

12. Rail vehicle (100) according to claim 11, **characterized in that**, at least one current collector (1) in each case is arranged on a middle carriage (102) connected to one or two end carriages (101), and the power supply line thus runs from or to the middle carriage (102) to or from the one or two end carriages (101), in particular the middle carriage (102) with current collector (1) comprises a main switch (2).

13. Rail vehicle (100) according to claim 10, **characterized in that** the rail vehicle (100) comprises at least one, preferably two, end carriages and at least one middle carriage, each end carriage each comprising preferably two converters, the end carriage being supplied with power by the energy-supplying double-deck carriage, so that a power supply line is formed from the main transformer on the middle carriage to the converter in the end carriage.

14. Method for manufacturing an energy-supplying double-deck carriage (103) according to one of the claims 1 to 9, **characterized in that** the main transformer (3) is preferably arranged substantially above a bogie, particularly on or at the roof (9).

## Revendications

1. Wagon à deux étages alimentés en énergie (103), en particulier un wagon à deux étages pour passagers, comprenant un transformateur principal (3), une ligne d'alimentation électrique vers le transformateur principal (3), au moins un bogie (13, 18) et un toit (9), **caractérisé en ce que** le transformateur principal (3) est disposé dans une zone du toit, de préférence sensiblement au-dessus du bogie, en particulier sur ou au niveau du toit (9), dans lequel au moins un bogie est un bogie moteur, dans lequel le wagon à deux étages alimentés en énergie (103) comprend au moins un convertisseur, dans lequel un convertisseur est prévu pour chaque bogie moteur, dans lequel le convertisseur est disposé essentiellement au-dessus d'un bogie.

2. Wagon à deux étages alimentés en énergie (103) selon la revendication 1, **caractérisé par le fait que** le transformateur principal (3) est disposé sensiblement dans la direction transversale du wagon à deux étages alimentés en énergie (103) au centre, de préférence avec la plus grande longueur du transformateur principal (3) parallèle à l'axe longitudinal.

3. Wagon à deux étages alimentés en énergie (103) selon l'une des revendications précédentes, **caractérisé par le fait que** le wagon à deux étages alimentés en énergie (103) comprend au moins un interrupteur principal (2), et que l'interrupteur principal (2) est de préférence placé dans la ligne d'alimentation du transformateur principal et établit une connexion déconnectable.

4. Wagon à deux étages alimentés en énergie (103) selon l'une des revendications précédentes, **caractérisé par le fait que** le wagon à deux étages alimentés en énergie comprend un ou deux collecteurs de courant (1) qui alimentent au moins un transformateur principal (3) par l'intermédiaire de la ligne d'alimentation.

5. Wagon à deux étages alimentés en énergie (103) selon l'une des revendications précédentes, **caractérisé par le fait qu'**un convertisseur est disposé essentiellement au-dessus de chaque bogie moteur.

6. Wagon à deux étages alimentés en énergie (103) selon l'une des revendications précédentes, **caractérisé en ce que** le wagon à deux étages alimentés en énergie (103) comprend un dispositif de refroidissement (14), le dispositif de refroidissement (14) étant disposé de manière à pouvoir être utilisé pour le convertisseur (4) et le moteur de traction (5) du bogie moteur.

7. Wagon à deux étages alimenté en énergie (103) selon l'une des revendications précédentes, **caractérisé en ce que** le wagon à deux étages alimentés en énergie (103) a une structure de corps de wagon renforcée, de préférence par un profil fermé le long des parois latérales et/ou du plafond et/ou du plancher du wagon à deux étages alimentés en énergie (103), afin de pouvoir supporter le poids du transformateur principal (3) dans la zone du toit.

8. Wagon à deux étages alimentés en énergie (103) selon l'une des revendications précédentes, **caractérisé en ce que** le Wagon à deux étages alimentés en énergie est un wagon d'extrémité (101) qui présente notamment un avant (11), le transformateur principal étant disposé essentiellement à l'extrémité opposée à l'avant (11) dans le dernier tiers du wagon, de sorte que la charge par essieu n'excède pas 21 t, de préférence 20 t, lorsqu'il est correctement chargé.

9. Wagon à deux étages alimentés en énergie (103), selon l'une des revendications précédentes 1 à 7, **caractérisé par le fait que** le wagon à deux étages alimentés en énergie est un wagon central (102).

10. Véhicule ferroviaire (100) **caractérisé en ce que** le véhicule ferroviaire comprend au moins un Wagon à deux étages alimentés en énergie (103) selon l'une des revendications précédentes.

11. Véhicule ferroviaire (100) selon la revendication 10, **caractérisé en ce que** le véhicule ferroviaire comprend au moins un, en particulier deux, Wagon à deux étages alimentés en énergie (103) en tant que wagons d'extrémité (101).

12. Véhicule ferroviaire (100) selon la revendication 11, **caractérisé en ce qu'**au moins un collecteur de courant (1) est disposé dans chaque cas sur un wagon central (102) relié à un ou deux wagons d'extrémité (101), et la ligne d'alimentation électrique va donc du ou vers le wagon central (102) vers ou depuis le ou les deux wagons d'extrémité (101), en particulier le wagon central (102) avec le collecteur de courant (1) comprend un interrupteur principal (2) .

13. Véhicule ferroviaire (100) selon la revendication 10, **caractérisé en ce que** le véhicule ferroviaire (100) comprend au moins un, de préférence deux, wagons d'extrémité et au moins un wagon central, chaque wagon d'extrémité comprenant chacun de préférence deux convertisseurs, le wagon d'extrémité étant alimentés en énergie par le wagon à deux étages alimentés en énergie, de sorte qu'une ligne d'alimentation électrique est formée depuis le transformateur principal sur le wagon central jusqu'au convertisseur dans le wagon d'extrémité.

14. Procédé de fabrication d'un wagon à deux étages alimentés en énergie (103) selon l'une des revendications 1 à 9, **caractérisé en ce que** le transformateur principal (3) est de préférence disposé sensiblement au-dessus d'un bogie, notamment sur ou au niveau du toit (9).
